# EUROPÄISCHE PATENTSCHRIFT

(11) **EP 4 613 447 B1**
(45) Veröffentlichungstag und Bekanntmachung des Hinweises auf die Patenterteilung: **30.09.2026**
(21) Anmeldenummer: 24162122.6
(22) Anmeldetag: 07.03.2024
(51) Int. Cl.: B25J 15/04, B23B 31/107, B25B 5/16

(54) **SPANNSYSTEM UND WECHSELSYSTEM DAMIT**
CLAMPING SYSTEM AND CHANGEOVER SYSTEM HAVING THE SAME
SYSTÈME DE SERRAGE ET SYSTÈME DE CHANGEMENT L'UTILISANT

(43) Veröffentlichungstag der Anmeldung: 10.09.2025
(73) Patentinhaber: SUHNER Schweiz AG, 5242 Lupfig (CH)
(72) Erfinder: Wiedemeier, Stefan, 5242 Lupfig (CH)
(74) Vertreter: Gachnang AG Patentanwälte

(56) Entgegenhaltungen:
- EP-B1- 1 590 134
- DE-A1- 102017 103 070
- JP-A- 2023 027 544
- JP-B2- 7 184 501

## Beschreibung

Die Erfindung betrifft ein Spannsystem nach dem Oberbegriff des Patentanspruchs 1 und ein Wechselsystem damit.

Bei der Bearbeitung von Werkstücken werden Werkzeuge und/oder prozessbedingte Hilfsmittel wie Messtaster oder Greifer eingesetzt. In der Robotik werden Bearbeitungs- und Messmittel, die als letzte Elemente an kinematischen Ketten angeordnet sind, als Endeffektoren bezeichnet. Endeffektoren können mit Hilfe von Spannsystemen an Maschinen oder Roboterarmen in definierten Lagen und Ausrichtungen befestigt und ausgetauscht werden. Das Befestigen und Austauschen kann manuell oder mit einem Wechselsystem erfolgen.

Ein Wechselsystem umfasst ein Magazin für Endeffektoren, mindestens einen Endeffektor und mit mindestens einem Spannsystem.

Vom Spannsystem ist beispielsweise an einem Roboterarm eine erste Spanneinrichtung und am mindestens einen Endeffektor eine zweite Spanneinrichtung angeordnet. Bei einem Wechselvorgang wird beispielsweise der Endeffektor vom Roboterarm beim Magazin durch Koppeln der ersten und der zweiten Spanneinrichtung ergriffen oder durch Entkoppeln im Magazin abgelegt. Ein Mass für die Schnelligkeit des Wechselsystems ist die Endeffektor-Wechselzeit. Der Ablauf bzw. die Logik des Wechselvorganges ist durch eine Maschinensteuerung festgelegt.

Gängige Spannsysteme umfassen eine erste und eine zweite Spanneinrichtung, die je eine Einrichtungsachse und um die Einrichtungsachse eine Kontaktfläche aufweisen. Die beiden Spanneinrichtungen sind in der Richtung einer Kopplungsachse so koppelbar, dass ihre Kontaktflächen mit einer Kopplungskraft beaufschlagt aneinander anliegen und ihre Einrichtungsachsen auf der Kopplungsachse liegen.

Bei vielen bekannten Spannsystemen sind in einer der beiden Spanneinrichtungen Kugeln radial zur Einrichtungsachse verschiebbar gelagert. In der anderen Spanneinrichtung ist ringförmig um die Einrichtungsachse eine an den Kugeldurchmesser angepasste Nut ausgebildet. Vor dem Aufbau der Kopplungskraft sind die Zentren der Kugeln in ihren Führungen in Richtung der Kopplungsachse etwas gegen das Zentrum der Nut verschoben. Zum Aufbau der Kopplungskraft drückt ein Betätigungsorgan die Kugeln in radialer Richtung anfänglich an einen im Längsschnitt quer zur Kopplungsachse verlaufenden Nutrand. Dabei wirken von den Kugeln Kräfte senkrecht auf den Nutrand. Diese Kräfte bewegen die Spanneinrichtung mit der Nut soweit in die Spanneinrichtung mit den Kugeln, dass die Kontaktflächen der beiden Spanneinrichtungen mit der gewünschten Kopplungskraft beaufschlagt aneinander anliegen.

DE 103 04 507 B3 zeigt ein Spannsystem mit einer ringförmigen Spanneinrichtung, in der in Winkelabständen von 120° je zwei Kugeln und dazwischen ein Distanzstück in zur Einrichtungsachse radialen Bohrungen verschiebbar gelagert sind. Zum radialen Verschieben der Kugelpaare mit dem je dazwischen liegenden Distanzstück ist radial aussen an der ringförmigen Spanneinrichtung ein ringförmiges Betätigungsorgan angeordnet, welches in drei Winkelbereichen von je 120° Verriegelungssegmente mit Rampenabschnitten umfasst. In die Durchgangsöffnung der ringförmigen Spanneinrichtung wird eine bolzenförmige Spanneinrichtung mit einer Ringnut eingeschoben. Danach wird das Betätigungsorgan so relativ zu den Bohrungen mit den Kugeln und den Distanzstücken verdreht, dass die Rampenabschnitte des Betätigungsorgans die radial inneren Kugeln in die Nut der bolzenförmigen Spanneinrichtung drücken und dabei die Kontaktflächen der beiden Spanneinrichtungen mit der gewünschten Kopplungskraft beaufschlagt aneinanderpressen. Zwischen den inneren Kugeln und dem Nutrand an den die Kugeln gedrückt werden entstehen grosse Kräfte, welche bei vielen Spannvorgängen zu unerwünschten Abnützungen führen. DE 10 2017 103070 A1, EP 1 590 134 B1, JP 2023 027544 A und JP 7 184501 B2 zeigen weiter Ausführungsarten von Spannsystemen.

Die erfindungsgemässe Aufgabe besteht nun darin eine Lösung zu finden, die einfach aufgebaut und betätigbar ist und auch bei vielen Spannvorgängen möglichst wenig Abnützungseffekte zeigt. Diese Aufgabe wird durch ein Spannsystem mit den Merkmalen des Anspruchs 1 und durch Werkzeugwechsler mit diesem Spannsystem gelöst. Die abhängigen Ansprüche beschreiben vorteilhafte Ausführungsvarianten, welche weitere Aufgaben lösen.

Im Rahmen eines ersten erfinderischen Schrittes wurde erkannt, dass bei Spannsystemen mit radial bewegten Kugeln die Abnützungseffekte dadurch entstehen, dass der Aufbau einer Kopplungskraft zwischen den Kontaktflächen der beiden Spanneinrichtungen mit einer minimalen Radialbewegung der Kugeln im Kontakt zu einer zu bewegenden Stützfläche erfolgt. Dabei wirkt sich der gesamte Kraftaufbau auf eine kleine Ausdehnung der Stützfläche aus.

Im Rahmen eines zweiten erfinderischen Schrittes wurde erkannt, dass sich der Kraftaufbau über eine grössere Ausdehnung einer Stützfläche aufbauen lässt, wenn sich die Stützfläche in Umfangsrichtung erstreckt und die Spannkugeln zum Aufbauen der Kopplungskraft in Umfangsrichtung bewegt werden.

Ein erfindungsgemässes Spannsystem umfasst eine erste und eine zweite Spanneinrichtung, die eine erste bzw. eine zweite Einrichtungsachse und um die erste bzw. zweite Einrichtungsachse eine erste bzw. zweite Kontaktfläche aufweisen. Die erste und die zweite Spanneinrichtung sind in der Richtung einer Kopplungsachse so koppelbar, dass die erste und die zweite Kontaktfläche mit einer Kopplungskraft beaufschlagt aneinander anliegen und die erste und vorzugsweise die zweite Einrichtungsachse auf der Kopplungsachse liegen.

Die erste Spanneinrichtung umfasst ein erstes Element, ein zweites Element und mindestens drei Spannkugeln. Das erste und das zweite Element sind um die erste Einrichtungsachse relativ zueinander verdrehbar. Die mindestens drei Spannkugeln sind entlang einer um die erste Einrichtungsachse führenden Kreislinie an in Umfangsrichtung und in radialer Richtung fixen Positionen des zweiten Elements rollbar gelagert.

Die zweite Spanneinrichtung weist in einem Nutelement mindestens drei Nutführungen auf, die entlang einer um die zweite Einrichtungsachse führenden Kreislinie in gleichen Winkelabständen wie die Spannkugeln angeordnet sind. Jede Nutführung erstreckt sich jeweils in einem Zugangsbereich zum Einführen der Spannkugeln parallel zur zweiten Einrichtungsachse und anschliessend in einem Spannabschnitt teilweise um die zweite Einrichtungsachse. Die Spannabschnitte sind von schraubenlinienartigen Nutverläufen mit tangentialen Komponenten um die Drehachse und mit Komponenten parallel zur Drehachse gebildet.

Die Spannkugeln ragen je mit einem ersten Bereich aus dem zweiten Element heraus und sind radial so von der ersten Einrichtungsachse beabstandet, dass die ersten Bereiche der Spannkugeln beim Koppeln der ersten Spanneinrichtung mit der zweiten Spanneinrichtung in einer Einführposition des zweiten Elementes durch die Zugangsbereiche in die Spannabschnitte führbar sind. Durch Verdrehen des zweiten Elementes relativ zum ersten Element um die Kopplungsachse sind die ersten Bereiche der Spannkugeln in den Spannabschnitten in eine Spannposition bringbar, wobei die ersten Bereiche der Spannkugeln durch die Bewegung entlang der schraubenlinienartigen Nutverläufe die erste und die zweite Kontaktfläche mit der Kopplungskraft aneinander pressbar machen.

Beim erfindungsgemässen Spannsystem erfolgt der Aufbau der Kopplungskraft durch eine Bewegung der Spannkugeln entlang der schraubenlinienartigen Nutverläufe, die sich je über einen Winkelbereich um die Kopplungsachse erstrecken. Der maximale Winkelbereich eines Spannabschnittes ergibt sich indem von 360° die Summe der Winkelbereiche aller Zugangsbereiche abgezogen und der verbleibende Winkel durch die Anzahl Spannkugeln geteilt wird. Dem maximalen Winkelbereich ist abhängig vom Abstand der Nutverläufe von der zweiten Einrichtungsachse ein maximaler Weg zugeordnet, der von einer Spannkugel im Kontakt mit dem Spannabschnitt zum Kraftaufbau zurückgelegt werden kann. Dieser maximale Weg ist wesentlich grösser als bei den aus dem Stand der Technik bekannten Lösungen mit zum Kraftaufbau radial bewegten Kugeln. Entsprechend ergeben sich bei der erfindungsgemässen Lösung kleinere Materialabnützungen. Vorzugsweise weist die erste Spanneinrichtung eine sich vorzugsweise rotationssymmetrisch um die erste Einrichtungsachse erstreckende Stützfläche zu den Spannkugeln auf, wobei die Spannkugeln bei von den ersten Bereichen abgewandten zweiten Bereichen an der Stützfläche anliegen. Die Spannkugeln befinden sich beim Verdrehen des zweiten Elementes relativ zum ersten Element zwischen den Spannabschnitten und der Stützfläche. Die Steigung der Nutverläufe ist so gewählt, dass das Nutelement beim Verdrehen des zweiten Elementes so in Richtung der Kopplungsachse bewegt wird, dass die Kontaktflächen der beiden Spanneinrichtung gegeneinander bewegt und gepresst werden. Dabei übertragen die Spannkugeln Kräfte zwischen den Spannabschnitten und der Stützfläche.

Gemäss einer vorteilhaften Ausführungsform umfasst die erste Spanneinrichtung ein drittes Element, welches zwischen dem ersten und zweiten Element angeordnet und um die erste Einrichtungsachse drehbar am ersten und/oder zweiten Element gelagert ist, wobei die Stützfläche zu den Spannkugeln am dritten Element ausgebildet ist. Die Drehbarkeit des dritten Elements und der daran ausgebildeten Stützfläche ermöglicht es, dass die Spannkugeln beim Verdrehen des zweiten Elementes sowohl an den Spannabschnitten als auch an der Stützfläche im Wesentlichen eine Abrollbewegung ausführen. Diese Abrollbewegung reduziert die beim Spannen entstehenden Reibungskräfte zwischen den Spannkugeln und den Spannabschnitten sowie der Stützfläche. Beim Verdrehen des zweiten Elementes wird das dritte Element aufgrund der Abrollbewegung um einen grösseren Winkel verdreht als das zweite Element.

Besonders vorteilhaft ist eine Ausführungsform, bei der das dritte Element am ersten Element über ein rotationssymmetrisch um die erste Einrichtungsachse verlaufendes Drehlager gelagert ist. Beim Koppeln wird das dritte Element von den Spannkugeln aufgrund ihrer Bewegung entlang der schraubenlinienartigen Nutverläufe und aufgrund ihrer Drehung und ihres Kontaktes zur Stützfläche in Drehung versetzt. Das Drehlager reduziert die beim Aufbau der Kopplungskraft zwischen dem drehenden dritten Element und dem nicht drehenden ersten Element auftretende Reibung.

Das Drehlager wird vorzugsweise von einem Nadellager oder gegebenenfalls von Lagerkugeln gebildet. Die Lagerflächen, zwischen denen die Nadeln oder Kugeln des Drehlagers angeordnet sind, werden bei einer besonders vorteilhaften Ausführung in Schnittebenen mit der ersten Einrichtungsachse so ausgerichtet, dass die von den Spannkugeln in Winkeln zur ersten Einrichtungsachse auf das dritte Element übertragenen Kräfte im Wesentlichen unter den gleichen Winkeln an das erste Element abgeleitet werden. Dadurch wird die Reibung zwischen dem dritten und dem ersten Element reduziert und die Kraftableitung bewirkt auch eine Zentrierung bzw. ein Zusammenfallen der ersten und der zweiten Einrichtungsachse.

Bei einer weiteren vorteilhaften Ausführungsform umfasst das Spannsystem eine Dreheinrichtung, welche das zweite Element relativ zum ersten Element um die erste Einrichtungsachse zwischen der Einführposition und der Spannposition drehbar macht. Die Dreheinrichtung kann vor dem Koppeln das zweite Element in die Einführposition drehen und nach dem Einführen der Spannkugeln in die Spannabschnitte das zweiten Elementes relativ zum ersten Element mit den Spannkugeln in den Spannabschnitten in die Spannposition drehen. Zum Trennen der beiden Spanneinrichtungen dreht die Dreheinrichtung das zweite Element von der Spannposition in die Einführposition.

Wenn die Dreheinrichtung eine Federeinrichtung und eine Betätigungseinrichtung umfasst, wird das zweite Element in einer der beiden Drehrichtungen durch die Federeinrichtung und in die andere durch die Betätigungseinrichtung bewegt. Vorzugsweise hält die Federeinrichtung das zweite Element relativ zum ersten Element mit einer Vorspannkraft in der Spannposition und die Betätigungseinrichtung bewegt das zweite Element relativ zum ersten Element entgegen der Vorspannkraft in die Einführposition.

Bei einer vorteilhaften Ausführungsform umfasst das Spannsystem eine Ausrichtungseinrichtung, welche an der ersten Spanneinrichtung und an der zweiten Spanneinrichtung Eingriffselemente aufweist, die in einer vorgegebenen relativen Ausrichtung der ersten zur zweiten Spanneinrichtung um die Kopplungsachse ineinander eingreifen. Die Eingriffselemente sind so angeordnet, dass beim Koppeln der beiden Spanneinrichtungen mit dem zweiten Element in der Einführposition die Spannkugeln in die Zugangsbereiche einführbar sind. Die Ausrichtungseinrichtung verhindert in den vorgegebenen relativen Ausrichtungen rotative Relativbewegungen um die Kopplungsachse zwischen der ersten und zweiten Spanneinrichtung.

Die erfindungsgemässe Spanneinrichtung ist vielfältig einsetzbar. An den jeweiligen Einsatz angepasst umfasst die erste Spanneinrichtung eine erste Verbindungseinrichtung, welche beispielsweise mit einem Maschinenteil, vorzugsweise einem Roboterarm, verbindbar ist. Die zweite Spanneinrichtung umfasst eine zweite Verbindungseinrichtung, welche beispielsweise mit einem Endeffektor verbindbar ist.

Wenn das Spannsystem zusammen mit einem Endeffektor mit einem antreibbaren Werkzeug eingesetzt wird, umfasst die erste Spanneinrichtung vorzugsweise einen Antrieb mit einer Antriebswelle und die zweite Spanneinrichtung eine Abtriebswelle, die beim Koppeln der ersten Spanneinrichtung mit der zweiten Spanneinrichtung so mit der Antriebswelle in Verbindung bringbar ist, dass eine Drehbewegung der Antriebswelle auf eine Drehbewegung der Abtriebswelle übertragbar ist. Die Anordnung des Antriebs an der ersten Spanneinrichtung ermöglicht es, dass die Endeffektoren ohne Antriebe aufgebaut werden können und die Antriebsverbindung direkt beim Koppeln der beiden Spanneinrichtungen entsteht.

Damit die Antriebswelle und die Abtriebswelle beim Koppeln in Verbindung gebracht werden können, umfasst das Spannsystem vorzugsweise ein erstes Wellenende und ein zweites Wellenende mit einer ersten bzw. einer zweiten Formkontur. Die erste Formkontur kann formschlüssig mit der zweiten Formkontur in Eingriff gebracht werden. Zum Erzielen des Formschlusses müssen die beiden Wellenenden mit aufeinanderliegenden Wellenachsen und mit entsprechend der Formkonturen passenden Drehlagen um die Wellenachsen miteinander in Kontakt gebracht werden.

Die Formkonturen sind so ausgebildet, dass sie mindestens in einer relativen Drehlage ineinander eingreifen. Vorzugsweise sind die Formkonturen so ausgebildet, dass der Formschluss in einer ganzen Zahl n von Drehlagen erzielbar ist, wobei der Verdrehungswinkel zwischen zwei aufeinander folgenden Drehlagen ein ganzer Bruchteil von 360°, also 360°/n ist. Gängige Formkonturen für formschlüssige Verbindungen weisen beispielsweise Verdrehungswinkel zwischen zwei aufeinander folgenden Drehlagen von 60° auf und entsprechend können sie in 6 verschiedenen Verdrehungslagen ineinander eingreifen.

Damit beim Koppeln unabhängig von den vor dem Koppeln vorliegenden Drehausrichtungen der Antriebswelle und der Abtriebswelle störungsfrei eine formschlüssige Verbindung zwischen der Antriebswelle und Abtriebswelle entsteht, ist zwischen dem ersten Wellenende und dem zweiten Wellenende eine Drehausrichtungsvorrichtung ausgebildet. Die Drehausrichtungsvorrichtung macht die Drehausrichtungen der Antriebswelle und der Abtriebswelle durch die relative Kopplungsbewegung entlang der Kopplungsachse erzielbar und umfasst an einem Wellenende mindestens eine Ausrichtungsnut und am anderen Wellenende mindestens ein gegen das erste Wellenende vorgespanntes, bewegliches Eingriffselement.

Die Anzahl der Ausrichtungsnuten und/oder der vorgespannten, beweglichen Eingriffselemente entspricht vorzugsweise der Anzahl n verschiedener Verdrehungslagen, in denen die Formkonturen ineinander eingreifen können. Jede Ausrichtungsnut erstreckt sich schraubenlinienartig über einen Winkelbereich, welcher mindestens dem Verdrehungswinkel zwischen zwei aufeinander folgenden Drehlagen mit einem Formschluss entspricht, also mindestens über 360°/n. Bei mehr als einer Ausrichtungsnut sind die Ausrichtungsnuten in Winkelabständen um die Wellenachse verteilt, wobei die Winkelabstände vorzugsweise im Wesentlichen gleich gross sind.

Jede Ausrichtungsnut weist zwischen zwei Nuträndern eine Nutbreite auf und das mindestens eine Eingriffselement kann bei einem Eintrittsanfang jeder Ausrichtungsnut in einem Bereich zwischen den Nuträndern in die Ausrichtungsnut eintreten. Der Winkelbereich, über den sich jede Ausrichtungsnut schraubenlinienartig erstreckt, umfasst den Bereich, in dem das mindestens eine Eingriffselement in den Eintrittsanfang der Ausrichtungsnut eintreten kann.

Beim Koppeln kann nun das mindestens eine vorgespannte, bewegliche Eingriffselement mit einem freien Ende direkt in eine Ausrichtungsnut eintreten, oder es trifft beim ersten Wellenende mit dem freien Ende auf einen an den oberen Rand der Ausrichtungsnut anschliessenden nutfreien Bereich, wird von diesem nutfreien Bereich gegen das zweite Wellenende gedrückt und läuft beim weitergehenden Koppeln auf dem nutfreien Bereich bis es auf einen Abschnitt einer Ausrichtungsnut trifft und aufgrund der Vorspannung mit dem freien Ende in diese eintritt. Wenn das mindestens eine vorgespannte, bewegliche Eingriffselement mit seinem freien Ende in einer Ausrichtungsnut eingetreten ist und beim weiteren Koppeln dieser folgt, wird die relative Drehausrichtung zwischen dem ersten und dem zweiten Wellenende geändert bis in der erreichten relativen Drehausrichtung eine formschlüssige Verbindung zwischen der Antriebswelle und Abtriebswelle durch eine Relativbewegung entlang der Wellenachse erzielbar ist.

Die Drehausrichtungsvorrichtung stellt sicher, dass unabhängig von der jeweiligen relative Drehausrichtung zwischen dem ersten und dem zweiten Wellenende immer eine formschlüssige Verbindung zwischen der Antriebswelle und Abtriebswelle erzielbar ist.

Ein erfindungsgemässes Wechselsystem umfasst einen Roboterarm, ein Magazin für Endeffektoren, mindestens einem Endeffektor und mindestens ein Spannsystem gemäss einem der Ansprüche 1 bis 14, wobei am Roboterarm die erste oder die zweite Spanneinrichtung des mindestens einen Spannsystems und am mindestens einen Endeffektor die zweite bzw. die erste Spanneinrichtung des mindestens einen Spannsystems angeordnet ist.

Anhand einiger Figuren wird die Erfindung im Folgenden näher beschrieben. Dabei zeigen
- Figur 1: eine perspektivische Darstellung des Spannsystems vor dem Koppeln der ersten mit der zweiten Spanneinrichtung,
- Figur 2: eine perspektivische Darstellung des Spannsystems nach dem Einführen der zweiten in die erste Spanneinrichtung,
- Figur 3: eine perspektivische Darstellung des Spannsystems in der Spannposition,
- Figur 4: eine Schnitt- und Seitenansichts-Darstellung zu Fig. 1,
- Figur 5: eine Querschnitt- und Längsschnitt-Darstellung zu Fig. 2,
- Figur 6: eine Querschnitt- und zwei Längsschnitt-Darstellungen zu Fig. 3,
- Figur 7: eine Längsschnitt-Darstellung des Spannsystems bei dem die erste Spanneinrichtung zwischen dem ersten und dritten Element ein Kugellager aufweist,
- Figur 8: eine Schnitt- und Seitenansichts-Darstellung vor dem Koppeln der ersten mit der zweiten Spanneinrichtung, wobei die erste Spanneinrichtung die Stützfläche am ersten Element aufweist,
- Figur 9: eine perspektivische Darstellung des Spannsystems mit einer Dreheinrichtung vor dem Einführen der zweiten in die erste Spanneinrichtung,
- Figur 10: eine perspektivische Darstellung des Spannsystems mit einer Dreheinrichtung beim Spannen,
- Figur 11: eine perspektivische Darstellung des Spannsystems mit einer Dreheinrichtung nach dem Spannen,
- Figur 12: eine Darstellung eines Spannsystems mit verbindbarer Antriebs- und Abtriebswelle,
- Figur 13: eine perspektivische Darstellung einer Drehausrichtungsvorrichtung,
- Figur 14: eine perspektivische Darstellung eines Wechselsystems mit einem Roboterarm mit Endeffektor und mit einem Magazin für Endeffektoren,
- Figur 15: eine perspektivische Darstellung des Endbereichs eines Roboterarms mit einem dem Magazin entnommenen Endeffektor,
- Figur 16: eine perspektivische Darstellung des Endbereichs eines Roboterarms vor dem Entnehmen eines Endeffektors aus dem Magazin,
- Figur 17: eine perspektivische Darstellung des Endbereichs eines Roboterarms mit der Betätigungseinrichtung des Spannsystems in der Einführposition,
- Figur 18: eine perspektivische Darstellung des Endbereichs eines Roboterarms mit vollständig zusammengeführten Spanneinrichtungen, und
- Figur 19: eine perspektivische Darstellung des Endbereichs eines Roboterarms beim Entnehmen des Endeffektors.

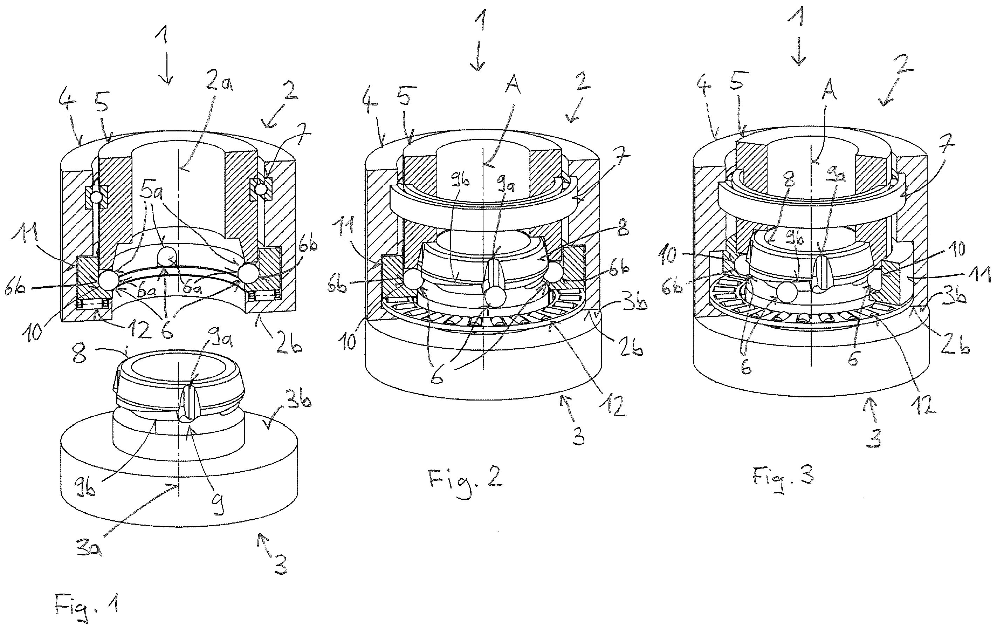

Die Figuren 1 bis 8 zeigen ein Spannsystem 1 mit einer ersten Spanneinrichtung 2 und einer zweiten Spanneinrichtung 3, welche eine erste bzw. eine zweite Einrichtungsachse 2a, 3a und um die erste bzw. zweite Einrichtungsachse 2a, 3a eine erste bzw. zweite Kontaktfläche 2b, 3b aufweisen. Die Spanneinrichtungen 2, 3 sind in der Richtung einer Kopplungsachse A so koppelbar, dass die erste und die zweite Kontaktfläche 2b, 3b mit einer Kopplungskraft beaufschlagt aneinander anliegen und die erste und die zweite Einrichtungsachse 2a, 3a auf der Kopplungsachse A liegen.

Die erste Spanneinrichtung 2 umfasst ein erstes Element 4, ein zweites Element 5 und mindestens drei Spannkugeln 6. Das erste und das zweite Element 4, 5 sind über ein Lager 7 um die erste Einrichtungsachse 2a drehbar miteinander verbunden. Die mindestens drei Spannkugeln 6 sind entlang einer um die erste Einrichtungsachse 2a führenden Kreislinie an in Umfangsrichtung und in radialer Richtung fixen Positionen 5a des zweiten Elements 5 rollbar gelagert.

Die zweite Spanneinrichtung 3 weist in einem Nutelement 8 mindestens drei Nutführungen 9 auf, die entlang einer um die zweite Einrichtungsachse 3a führenden Kreislinie in gleichen Winkelabständen wie die Spannkugeln 6 angeordnet sind. Jede Nutführung 9 erstreckt sich jeweils in einem Zugangsbereich 9a zum Einführen der Spannkugeln 6 parallel zur zweiten Einrichtungsachse 3a und anschliessend in einem Spannabschnitt 9b teilweise um die zweite Einrichtungsachse 3a. Die Spannabschnitte 9b sind von schraubenlinienartigen Nutverläufen mit tangentialen Komponenten um die zweite Einrichtungsachse 3a und mit Komponenten parallel zur zweiten Einrichtungsachse 3a gebildet.

Die Spannkugeln 6 ragen je mit einem ersten Bereich 6a aus dem zweiten Element 5 heraus und sind radial so von der ersten Einrichtungsachse 2a beabstandet, dass die ersten Bereiche 6a der Spannkugeln 6 beim Koppeln der ersten Spanneinrichtung 2 mit der zweiten Spanneinrichtung 3 in einer Einführposition des zweiten Elementes 5 durch die Zugangsbereiche 9a in die Spannabschnitte 9b führbar sind. Durch Verdrehen des zweiten Elementes 5 relativ zum ersten Element 4 um die Kopplungsachse A sind die ersten Bereiche 6a der Spannkugeln 6 in den Spannabschnitten 9b in eine Spannposition bringbar, wobei die ersten Bereiche 6a der Spannkugeln 6 durch die Bewegung entlang der schraubenlinienartigen Nutverläufe die erste und die zweite Kontaktfläche 2b, 3b mit der Kopplungskraft aneinander pressen.

Bei den dargestellten Ausführungsformen weist die erste Spanneinrichtung 2 eine sich rotationssymmetrisch um die erste Einrichtungsachse 2a erstreckende Stützfläche 10 zu den Spannkugeln 6 auf, wobei die Spannkugeln 6 bei von den ersten Bereichen abgewandten zweiten Bereichen 6b an der Stützfläche 10 anliegen. Die Spannkugeln 6 befinden sich beim Verdrehen des zweiten Elementes 5 relativ zum ersten Element 4 zwischen den Spannabschnitten 9b und der Stützfläche 10. Die Steigung der Nutverläufe ist so gewählt, dass das Nutelement beim Verdrehen des zweiten Elementes 5 so in Richtung der Kopplungsachse A bewegt wird, dass die Kontaktflächen 2b, 3b der beiden Spanneinrichtung 2, 3 gegeneinander bewegt und gepresst werden. Dabei übertragen die Spannkugeln 6 Kräfte zwischen den Spannabschnitten 9b und der Stützfläche 10.

In den Ausführungsformen der Figuren 1 bis 7 umfasst die erste Spanneinrichtung 2 ein drittes Element 11, welches zwischen dem ersten und zweiten Element 4, 5 angeordnet und um die erste Einrichtungsachse 2a drehbar am ersten Element 4 gelagert ist, wobei die Stützfläche 10 zu den Spannkugeln 6 am dritten Element 11 ausgebildet ist. Die Drehbarkeit des dritten Elements 11 und der daran ausgebildeten Stützfläche 10 ermöglicht es, dass die Spannkugeln 6 beim Verdrehen des zweiten Elementes 5 sowohl an den Spannabschnitten 9b als auch an der Stützfläche 10 im Wesentlichen eine Abrollbewegung ausführen.

Diese Abrollbewegung reduziert die beim Spannen entstehenden Reibungskräfte zwischen den Spannkugeln 6 und den Spannabschnitten 9b sowie der Stützfläche 10. Beim Verdrehen des zweiten Elementes 5 wird das dritte Element 11 aufgrund der Abrollbewegung um einen grösseren Winkel verdreht als das zweite Element 5.

In der dargestellten Ausführungsform ist das dritte Element 11 am ersten Element 4 über ein rotationssymmetrisch um die erste Einrichtungsachse 2a verlaufendes Drehlager 12 gelagert, beispielsweise einem Nadellager. Beim Koppeln wird das dritte Element 11 von den Spannkugeln 6 aufgrund ihrer Bewegung entlang der Spannabschnitte 9b in Drehung versetzt. Das Drehlager 12 reduziert die beim Aufbau der Kopplungskraft zwischen dem drehenden dritten Element 11 und dem nicht drehenden ersten Element 4 auftretende Reibung.

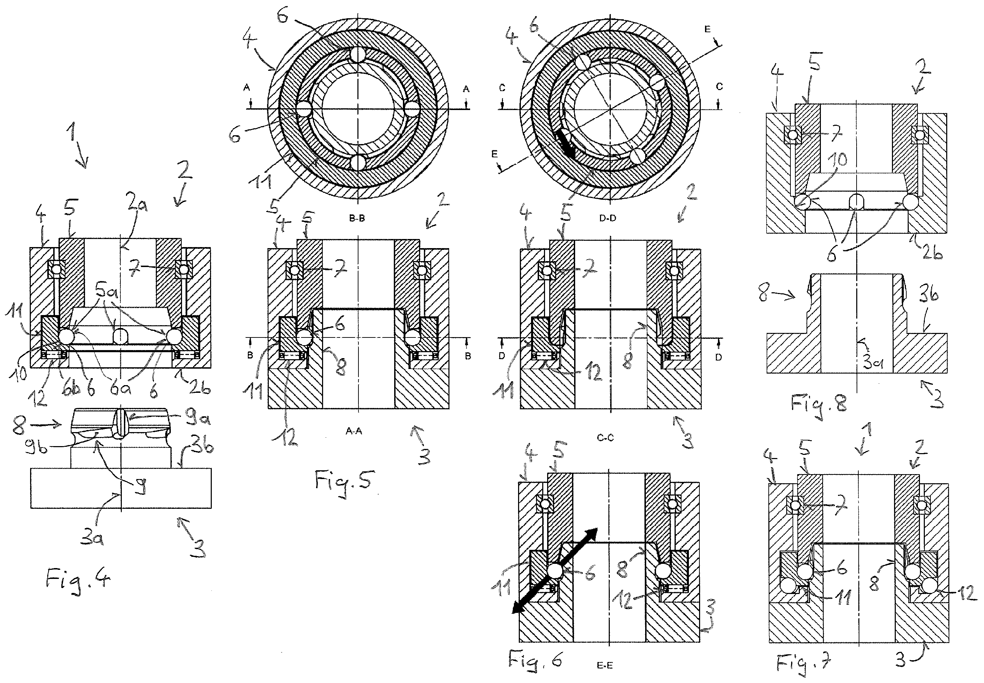

Die Fig. 6 veranschaulicht mit fetten Pfeilen die beim Spannen von den Spannkugeln 6 auf das dritte Element 11 und entsprechend auf das Nutelement 8 wirkenden Kräfte. Die erste Spanneinrichtung 2 umfasst daher im Wesentlichen nur ein erstes Element 4, ein zweites Element 5 und mindestens drei Spannkugeln 6.

Bei der Ausführung gemäss Fig. 7 wird das Drehlager 12 von Lagerkugeln gebildet, wobei die Lagerflächen der Lagerkugeln in Schnittebenen mit der ersten Einrichtungsachse so ausgerichtet sind, dass die von den Spannkugeln 6 in Winkeln zur ersten Einrichtungsachse 2a auf das dritte Element 11 übertragenen Kräfte im Wesentlichen unter den gleichen Winkeln an das erste Element 4 abgeleitet werden. Dadurch wird die Reibung reduziert und die Kraftableitung bewirkt eine Zentrierung bzw. ein Zusammenfallen der ersten und der zweiten Einrichtungsachse 2a, 3a auf der Kopplungsachse A.

In der Ausführung gemäss Figur 8 ist die Stützfläche 10 am ersten Element 4 ausgebildet und die erste Spanneinrichtung 2 besteht im Wesentlichen nur aus dem ersten Element 4, dem zweiten Element 5, dem zwischen diesen beiden Elementen angeordneten Lager 7 und den im zweiten Element gehaltenen mindestens drei Spannkugeln 6.

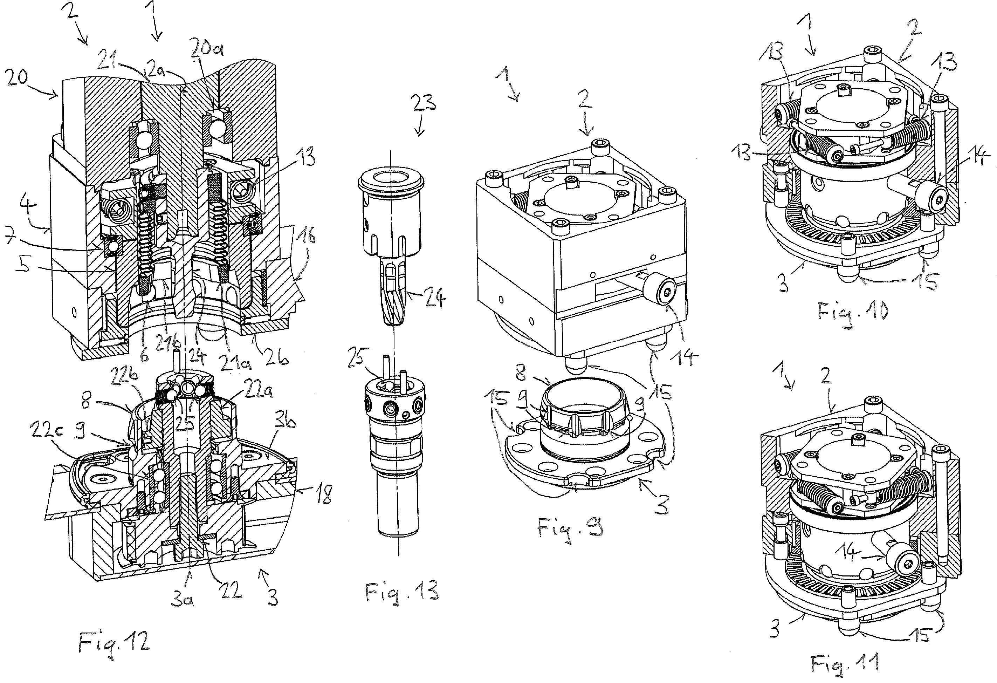

In den Ausführungen der Figuren 9 bis 12 und 14 bis 19 umfasst das Spannsystem 1 eine Dreheinrichtung, welche das zweite Element 5 relativ zum ersten Element 4 um die erste Einrichtungsachse 2a zwischen der Einführposition und der Spannposition drehbar macht. Die dargestellte Dreheinrichtung umfasst eine Federeinrichtung 13 und eine Betätigungseinrichtung 14. Das zweite Element 5 wird in einer der beiden Drehrichtungen durch die Federeinrichtung 13 und in die andere durch die Betätigungseinrichtung 14 bewegt. Vorzugsweise hält die Federeinrichtung 13 das zweite Element 5 relativ zum ersten Element 4 mit einer Vorspannkraft in der Spannposition und die Betätigungseinrichtung 14 bewegt das zweite Element 5 relativ zum ersten Element 4 entgegen der Vorspannkraft in die Einführposition.

Die Figuren 9 bis 11 zeigen eine Ausrichtungseinrichtung, welche an der ersten Spanneinrichtung 2 und an der zweiten Spanneinrichtung 3 Eingriffselemente 15 aufweist, die in einer vorgegebenen relativen Ausrichtung der ersten zur zweiten Spanneinrichtung 2, 3 um die Kopplungsachse ineinander eingreifen. Die Eingriffselemente 15 sind so angeordnet, dass beim Koppeln der beiden Spanneinrichtungen 2, 3, wenn das zweite Element 5 in der Einführposition ist, die Spannkugeln 6 in die Zugangsbereiche 9a einführbar sind.

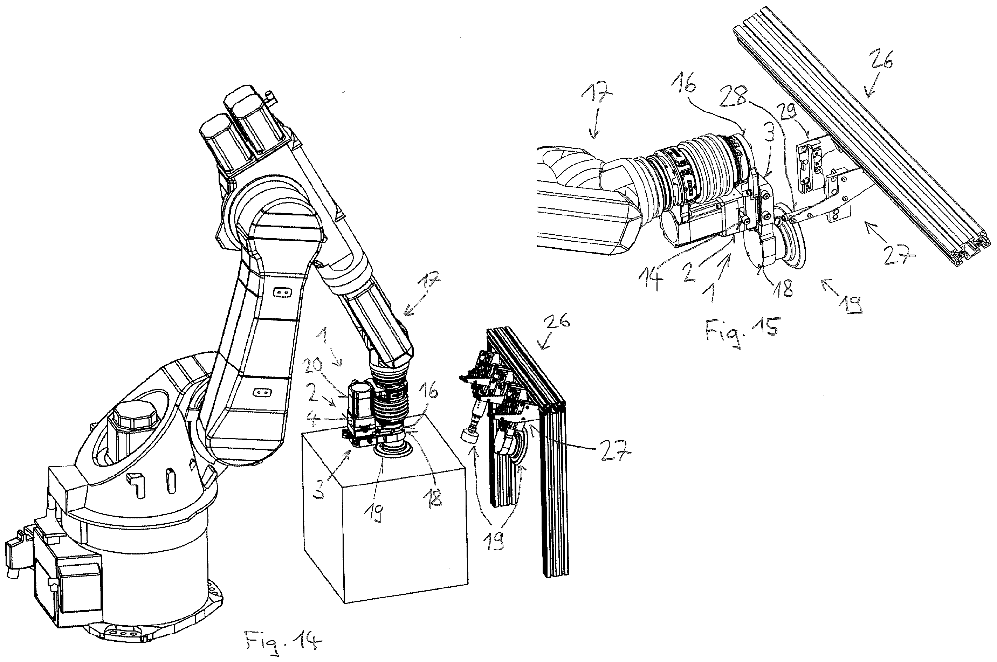

Die erste Spanneinrichtung 2 umfasst eine erste Verbindungseinrichtung 16, welche gemäss Fig. 14 mit dem freien Ende eines Roboterarms 17 verbindbar ist. Die zweite Spanneinrichtung 3 umfasst eine zweite Verbindungseinrichtung 18, welche mit einem Endeffektor 19 verbindbar ist.

Das dargestellte Spannsystem 1 wird zusammen mit einem Endeffektor 19 mit einem antreibbaren Werkzeug eingesetzt. Die erste Spanneinrichtung 2 umfasst, wie in Figur 12 dargestellt, einen Antrieb 20 mit einer Antriebswelle 21, sowie einem Antriebswellenlager 20a und die zweite Spanneinrichtung 3 eine Abtriebswelle 22, die beim Koppeln der ersten Spanneinrichtung 2 mit der zweiten Spanneinrichtung 3 Drehmoment übertragend mit der Antriebswelle 21 verbunden wird und mit einem Abtriebswellenlager 22c an der zweiten Spanneinrichtung 3 gelagert ist.

Figur 12 zeigt zur Verbindung der Antriebswelle 21 mit der Abtriebswelle 22 an der ersten Spanneinrichtung 2 ein erstes Wellenende 21a und an der zweiten Spanneinrichtung 3 ein zweites Wellenende 22a mit einer ersten bzw. einer zweiten Formkontur 21b, 22b. Die erste Formkontur 21b kann formschlüssig mit der zweiten Formkontur 22b in Eingriff gebracht werden. Zum Erzielen eines Formschlusses werden die beiden Wellenenden 21a, 22a mit aufeinanderliegenden Wellenachsen und mit entsprechend der Formkonturen 21b, 22b passenden Drehlagen um die Wellenachsen miteinander in Kontakt gebracht. Die Formkonturen 21b, 22b sind beispielsweise so ausgebildet, dass sie in sechs relativen Drehlagen ineinander eingreifen. Zwischen zwei aufeinander folgenden Drehlagen liegt ein Winkel von 60°.

Damit beim Koppeln unabhängig von vor dem Koppeln vorliegenden Drehausrichtungen der Antriebswelle 21 und der Abtriebswelle 22 störungsfrei eine formschlüssige Verbindung zwischen der Antriebswelle 21 und Abtriebswelle 22 entsteht, ist gemäss den Figuren 12 und 13 zwischen dem ersten Wellenende 21a und dem zweiten Wellenende 22a eine Drehausrichtungsvorrichtung 23 ausgebildet. Die Drehausrichtungsvorrichtung 23 umfasst am ersten Wellenende 21a, bzw. an einem mit dem ersten Wellenende 21a und der Antriebswelle 21 verbundenen Teil der Drehausrichtungsvorrichtung 23, mindestens eine Ausrichtungsnut 24 und am zweiten Wellenende 22a, bzw. an einem mit dem zweiten Wellenende 22a und der Abtriebswelle 22 verbundenen Teil der Drehausrichtungsvorrichtung 23, mindestens ein gegen einen Bereich mit der mindestens einen Ausrichtungsnut 24 vorgespanntes, bewegliches Eingriffselement 25.

Die dargestellte Ausführungsform umfasst 4 oder 6 Ausrichtungsnuten 24 und 4 oder 6 vorgespannte, bewegliche Eingriffselemente 25. Jede Ausrichtungsnut 24 erstreckt sich schraubenlinienartig über einen Winkelbereich, welcher mindestens dem Verdrehungswinkel zwischen zwei aufeinander folgenden Drehlagen mit einem Formschluss entspricht, bei der vorliegenden Ausführung über 90° bzw. 60°. Die Ausrichtungsnuten 24 sind in Winkelabständen um die Wellenachse verteilt, wobei die Winkelabstände vorzugsweise im Wesentlichen gleich gross sind.

Beim Koppeln kann das mindestens eine vorgespannte, bewegliche Eingriffselement 25 mit einem freien Ende direkt in eine Ausrichtungsnut 24 eintreten. Wenn es mit dem freien Ende auf einen an den oberen Rand der Ausrichtungsnut 24 anschliessenden nutfreien Bereich trifft, wird es von diesem nutfreien Bereich entgegen der Vorspannung zurückgedrückt und läuft beim weitergehenden Koppeln auf dem nutfreien Bereich bis es auf einen Abschnitt einer Ausrichtungsnut 24 trifft und aufgrund der Vorspannung mit dem freien Ende in diese eintritt. Wenn das mindestens eine vorgespannte, bewegliche Eingriffselement 25 mit seinem freien Ende in einer Ausrichtungsnut 24 eingetreten ist und beim weiteren Koppeln dieser folgt, wird die relative Drehausrichtung zwischen dem ersten und dem zweiten Wellenende 21a, 22a geändert bis eine formschlüssige Verbindung zwischen der Antriebswelle 21 und Abtriebswelle 22 entsteht.

Die Drehausrichtungsvorrichtung 23 stellt sicher, dass unabhängig von der jeweiligen relative Drehausrichtung zwischen dem ersten und dem zweiten Wellenende 21a, 22a immer eine formschlüssige Verbindung zwischen der Antriebswelle 21 und Abtriebswelle 22 erzielbar ist.

Ein Wechselsystem gemäss Fig. 14 bis 19 umfasst einen Roboterarm 17, ein Magazin 26 für Endeffektoren 19, mindestens einem Endeffektor 19 und mindestens ein erfindungsgemässes Spannsystem 1. Dabei ist am Roboterarm 17 die erste Spanneinrichtung 2 des mindestens einen Spannsystems 1 und am mindestens einen Endeffektor 19 die zweite Spanneinrichtung 3 des mindestens einen Spannsystems 1 angeordnet. Das Magazin 26 umfasst bei den Lagerpositionen der Endeffektoren 19 je eine Führungsschiene 28, welche mit der Betätigungseinrichtung 14 der ersten Spanneinrichtung 2 zusammenwirkt und dabei das Koppeln und Entkoppeln ermöglicht.

Fig. 14 bis 19 zeigen das Wechselsystem mit dem Roboterarm 17, dem Magazin 26 und dem Drehausrichtungssystem 1 in der Arbeitsposition (Fig. 14) und beim Wechseln des Endeffektors 19 (Fig.15 bis 19).

In der Fig. 14 ist die zweite Spanneinrichtung 3 so mit der ersten Spanneinrichtung 2 verbunden, dass die zweite Verbindungseinrichtung 18 zum freien Ende des Roboterarms 17 führt. In der Fig. 15 ist die zweite Spanneinrichtung 3 so mit der ersten Spanneinrichtung 2 verbunden, dass die zweite Verbindungseinrichtung 18 vom freien Ende des Roboterarms 17 wegführt.

Die verschiedenen Ausrichtungen der Fig. 14 und 15 werden durch die Ausrichtungselemente 15 ermöglicht, welche an der ersten Spanneinrichtung 2 und an der zweiten Spanneinrichtung 3 ausgebildet sind und in vorgegebenen relativen Ausrichtungen der ersten zur zweiten Spanneinrichtung 2, 3 um die Kopplungsachse ineinander eingreifen. Die durch die Ausrichtungselemente 15 vorgegebenen relativen Ausrichtungen sind an die Lagen der Spannkugeln 6 und der Zugangsbereiche 9a der Nutführungen 9 angepasst, so dass in den vorgegebenen relativen Ausrichtungen die Spannkugeln 6 in die Zugangsbereiche 9a der Nutführungen 9 einführbar sind.

Das Magazin 26 umfasst Haltevorrichtungen 27 für die Endeffektoren 30. Die Haltevorrichtungen 27 umfassen je eine Führungsschiene 28 und eine Einhänganordnung 29. Die Führungsschiene 28 ermöglich bei einer entsprechenden Bewegung des Roborterarms 17 die Betätigung der Betätigungseinrichtung 14. Die Einhänganordnung 29 ermöglicht bei einer entsprechenden Bewegung des Roborterarms 17 das Ein- und Aushängen eines Endeffektors 19.

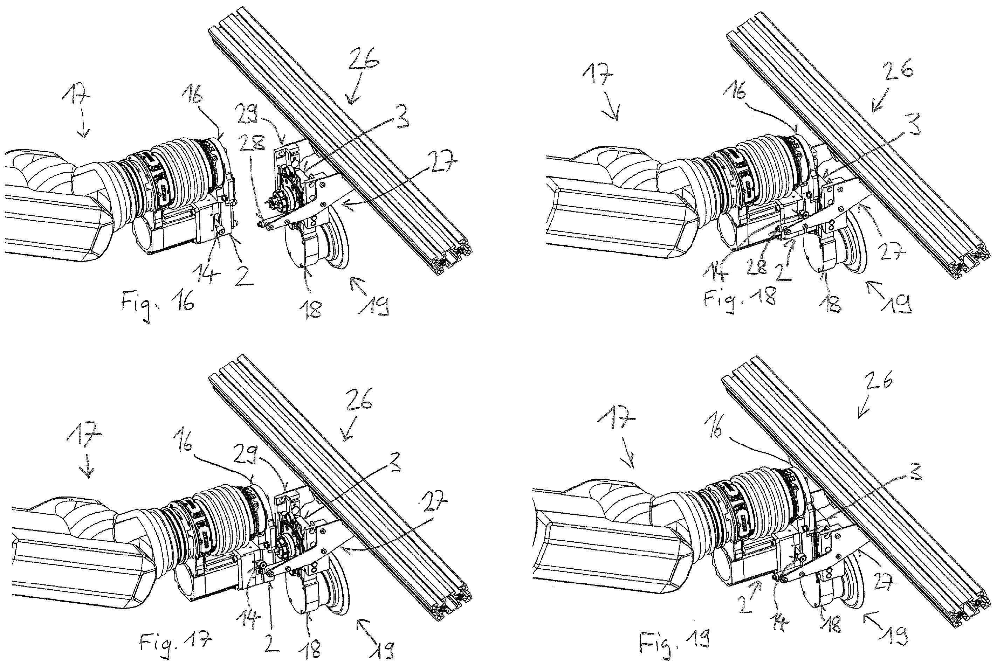

Die Figuren 16 bis 19 zeigen in der Reihenfolge 16, 17, 18, 19 das Verbinden des Roboterarms 17 mit einem Endeffektor 19 und in der Reihenfolge 19, 18, 17, 16 das Lösen des Endeffektors 19 vom Roboterarm 17.

Gemäss Fig. 16 ist das freie Ende des Roboterarms 17 mit der ersten Spanneinrichtung 2 vertikal etwas höher positioniert als die zweite Spanneinrichtung 3 des Endeffektors 19 im Magazin 26.

Gemäss Fig. 17 ist nach einer horizontalen und anschliessend vertikalen, nach unten durchgeführten Bewegung des freien Endes des Roboterarms 17 das zweite Element 5 der ersten Spanneinrichtung 2 durch die im Kontakt zur Führungsschiene 28 erzielte Bewegung der Betätigungseinrichtung 14 relativ zum ersten Element 4 in die Einführposition gedreht.

Gemäss Fig. 18 werden ausgehend von der Situation gemäss Fig. 17 durch eine Horizontalbewegung die erste Spanneinrichtung 2 und die zweite Spanneinrichtung 3 zusammengeführt.

Gemäss Fig. 19 ist nach einer vertikalen, nach oben durchgeführten Bewegung des freien Endes des Roboterarms 17 die Betätigungseinrichtung 14 von der Führungsschiene 28 abgehoben, so dass die Federeinrichtung 13 die Spannposition erzielt. Aufgrund der Bewegung nach oben ist der Endeffektor 19 aus der Einhänganordnung 29 entnommen und kann zu einem Arbeitsbereich bewegt werden.

## Patentansprüche

1. Spannsystem (1) mit einer ersten Spanneinrichtung (2), die eine erste Einrichtungsachse (2a) und um die erste Einrichtungsachse (2a) eine erste Kontaktfläche (2b) aufweist, und mit einer zweiten Spanneinrichtung (3), die eine zweite Einrichtungsachse (3a) und um die zweite Einrichtungsachse (3a) eine zweite Kontaktfläche (3b) aufweist, wobei die erste und die zweite Spanneinrichtung (2, 3) in der Richtung einer Kopplungsachse (A) so koppelbar sind, dass die erste und die zweite Kontaktfläche (2b, 3b) mit einer Kopplungskraft beaufschlagt aneinander anliegen, **dadurch gekennzeichnet, dass** die erste Spanneinrichtung (2) ein erstes Element (4), ein zweites Element (5) und mindestens drei Spannkugeln (6) umfasst, wobei das erste und das zweite Element (4, 5) um die erste Einrichtungsachse (2a) relativ zueinander verdrehbar sind und die mindestens drei Spannkugeln (6) entlang einer um die erste Einrichtungsachse (2a) führenden Kreislinie an in Umfangsrichtung und in radialer Richtung fixen Positionen des zweiten Elements (5) rollbar gelagert sind, und die zweite Spanneinrichtung (3) in einem Nutelement (8) mindestens drei Nutführungen (9) aufweist, die entlang einer um die zweite Einrichtungsachse (3a) führenden Kreislinie in gleichen Winkelabständen wie die Spannkugeln (6) angeordnet sind, sich jeweils in einem Zugangsbereich (9a) zum Einführen der Spannkugeln (6) parallel zur zweiten Einrichtungsachse (3a) erstrecken und sich anschliessend jeweils in einem Spannabschnitt (9b) teilweise um die zweite Einrichtungsachse (3a) erstrecken, wobei die Spannabschnitte (9a) von schraubenlinienartigen Nutverläufen mit tangentialen Komponenten um die zweite Einrichtungsachse (3a) und mit Komponenten parallel zur zweiten Einrichtungsachse (3a) gebildet sind, die Spannkugeln (6) je mit einem ersten Bereich (6a) aus dem zweiten Element (5) herausragen und radial so von der ersten Einrichtungsachse beabstandet sind, dass die ersten Bereiche (6a) der Spannkugeln (6) beim Koppeln der ersten Spanneinrichtung (2) mit der zweiten Spanneinrichtung (3) in einer Einführposition des zweiten Elementes (5) durch die Zugangsbereiche (9a) in die Spannabschnitte (9b) führbar sind und anschliessend durch Verdrehen des zweiten Elementes (5) relativ zum ersten Element (4) um die Kopplungsachse (A) in den Spannabschnitten (9b) in eine Spannposition bringbar sind, welche die erste und die zweite Kontaktfläche (2b, 3b) mit der Kopplungskraft aneinander pressbar macht.

2. Spannsystem (1) nach Anspruch 1, **dadurch gekennzeichnet, dass** die erste Spanneinrichtung (2) eine sich um die erste Einrichtungsachse (2a) erstreckende Stützfläche (10) zu den Spannkugeln (6) aufweist, wobei die Spannkugeln (6) bei von den ersten Bereichen (6a) abgewandten zweiten Bereichen (6b) an der Stützfläche (10) anliegen.

3. Spannsystem (1) nach Anspruch 2, **dadurch gekennzeichnet, dass** die erste Spanneinrichtung (2) ein drittes Element (11) umfasst, welches zwischen dem ersten Element (4) und dem zweiten Element (5) angeordnet und um die erste Einrichtungsachse (2a) drehbar am ersten und/oder zweiten Element (4, 5) gelagert ist, wobei die Stützfläche (10) am dritten Element (11) ausgebildet ist.

4. Spannsystem (1) nach Anspruch 3, **dadurch gekennzeichnet, dass** das dritte Element (11) am ersten Element (4) über ein rotationssymmetrisch um die erste Einrichtungsachse (2a) verlaufendes Drehlager (12) gelagert ist, beim Koppeln die Spannkugeln (6) durch die Bewegung entlang der schraubenlinienartigen Nutverläufe in Drehung versetzbar sind, die Spannkugeln (6) aufgrund ihrer Drehung und ihres Kontaktes zur Stützfläche (10) das dritte Element (11) um die erste Einrichtungsachse (2a) drehbar machen und das Drehlager (12) beim Aufbau der Kopplungskraft Reibungskräfte zwischen dem drehenden dritten Element (11) und dem ersten Element (4) reduzierbar macht.

5. Spannsystem (1) nach Anspruch 4, **dadurch gekennzeichnet, dass** das Drehlager (12) von einem Nadellager oder von Lagerkugeln gebildet wird und vorzugsweise die von den Spannkugeln (6) in Winkeln zur ersten Einrichtungsachse (2a) auf das dritte Element (11) übertragbaren Kräfte im Wesentlichen unter den gleichen Winkeln an das erste Element (4) ableitbar macht.

6. Spannsystem (1) nach einem der Ansprüche 1 bis 5, **dadurch gekennzeichnet, dass** das Spannsystem (1) eine Dreheinrichtung (13, 14) umfasst, welche das zweite Element (5) relativ zum ersten Element (4) um die erste Einrichtungsachse (2a) zwischen der Einführposition und der Spannposition drehbar macht.

7. Spannsystem (1) nach Anspruch 6, **dadurch gekennzeichnet, dass** die Dreheinrichtung (13, 14) eine Federeinrichtung (13) und eine Betätigungseinrichtung (14) umfasst, wobei die Federeinrichtung (13) das zweite Element (5) relativ zum ersten Element (4) mit einer Vorspannkraft in der Spannposition haltbar macht und die Betätigungseinrichtung (14) das zweite Element (5) relativ zum ersten Element (4) entgegen der Vorspannkraft in die Einführposition bewegbar macht.

8. Spannsystem (1) nach einem der Ansprüche 1 bis 7, **dadurch gekennzeichnet, dass** das Spannsystem (1) eine Ausrichtungseinrichtung (15) umfasst, welche an der ersten Spanneinrichtung (2) und an der zweiten Spanneinrichtung (3) Eingriffselemente (15) aufweist, die beim Koppeln in einer vorgegebenen relativen Ausrichtung der ersten zur zweiten Spanneinrichtung (2, 3) um die Kopplungsachse (A) ineinander eingreifen, wobei die Eingriffselemente (15) so angeordnet sind, dass beim Koppeln der beiden Spanneinrichtungen mit dem zweiten Element (5) in der Einführposition die Spannkugeln (6) in die Zugangsbereiche (9a) einführbar sind.

9. Spannsystem (1) nach einem der Ansprüche 6 bis 8, **dadurch gekennzeichnet, dass** die erste Spanneinrichtung (2) eine erste Verbindungseinrichtung (16) umfasst, welche mit einem Maschinenteil, vorzugsweise einem Roboterarm (17), verbindbar ist, und die zweite Spanneinrichtung (3) eine zweite Verbindungseinrichtung (18) umfasst, welche mit einem Endeffektor (19) verbindbar ist.

10. Spannsystem (1) nach Anspruch 9, **dadurch gekennzeichnet, dass** die erste Spanneinrichtung (2) einen Antrieb (20) mit einer Antriebswelle umfasst und die zweite Spanneinrichtung (3) eine Abtriebswelle, die beim Koppeln der ersten Spanneinrichtung (2) mit der zweiten Spanneinrichtung (3) so mit der Antriebswelle in Verbindung bringbar ist, dass eine Drehbewegung der Antriebswelle auf eine Drehbewegung der Abtriebswelle übertragbar ist.

11. Spannsystem (1) nach Anspruch 10, **dadurch gekennzeichnet, dass** das Spannsystem (1) ein erstes Wellenende (21) mit einer ersten Formkontur und ein zweites Wellenende (22) mit einer zweiten Formkontur umfasst, wobei die erste Formkontur in einer ganzen Zahl n von relativen Drehlagen der beiden Wellenenden (21, 22) formschlüssig mit der zweiten Formkontur in Eingriff bringbar ist.

12. Spannsystem (1) nach Anspruch 11, **dadurch gekennzeichnet, dass** zwischen dem ersten Wellenende (21) und dem zweiten Wellenende (22) eine Drehausrichtungsvorrichtung (23) ausgebildet ist, welche am ersten Wellenende (21) mindestens eine Ausrichtungsnut (24) und am zweiten Wellenende (22) mindestens ein vorgespanntes, bewegliches Eingriffselement (25) umfasst, wobei die Anzahl der Ausrichtungsnuten (24) der Anzahl n von relativen Drehlagen entspricht, jede Ausrichtungsnut (24) sich schraubenlinienartig über einen Winkelbereich von mindestens 360°/n erstreckt und bei mehr als einer Ausrichtungsnut (24) die Ausrichtungsnuten (24) in gleichen Winkelabständen um die Wellenachse verteilt sind.

13. Spannsystem (1) nach einem der Ansprüche 10 bis 12, **dadurch gekennzeichnet, dass** sich die Antriebswelle radial innerhalb des ersten und des zweiten Elementes (4, 5) entlang der ersten Einrichtungsachse (2a) erstreckt und dass sich die Abtriebswelle radial innerhalb des Nutelementes (8) entlang der zweiten Einrichtungsachse (3a) erstreckt.

14. Spannsystem (1) nach Anspruch 13, **dadurch gekennzeichnet, dass** die zweite Verbindungseinrichtung (18) eine Antriebsübertragung von der Abtriebswelle zu einem Werkzeuganschluss umfasst.

15. Wechselsystem mit einem Roboterarm (17), einem Magazin (26) für Endeffektoren (19), mindestens einem Endeffektor (19) und mit mindestens einem Spannsystem (1) gemäss einem der Ansprüche 1 bis 14, wobei am Roboterarm (17) die erste oder die zweite Spanneinrichtung (2, 3) des mindestens einen Spannsystems (1) angeordnet ist und am mindestens einen Endeffektor (19) die zweite bzw. erste Spanneinrichtung (3, 2) des mindestens einen Spannsystems (1) angeordnet ist.

## Claims

1. A clamping system (1) having a first clamping device (2), which has a first device axis (2a) and a first contact face (2b) around the first device axis (2a), and having a second clamping device (3), which has a second device axis (3a) and a second contact face (3b) around the second device axis (3a), the first and second clamping devices (2, 3) being couplable in the direction of a coupling axis (A) such that the first and second contact faces (2b, 3b) rest against one another with application of a coupling force, **characterized in that** the first clamping device (2) comprises a first element (4), a second element (5) and at least three clamping balls (6), the first and second elements (4, 5) being rotatable relative to one another about the first device axis (2a) and the at least three clamping balls (6) being mounted in rollable manner along a circular path leading about the first device axis (2a) at circumferentially and radially fixed points of the second element (5), and the second clamping device (3) has at least three slot guides (9) in a slot element (8), which slot guides (9) are arranged along a circular path leading about the second device axis (3a) at the same angular distances as the clamping balls (6), each extending parallel to the second device axis (3a) in an entrance region (9a) for insertion of the clamping balls (6) and then each extending in a clamping portion (9b) in part about the second device axis (3a), the clamping portions (9a) being formed of helical slot profiles with tangential components about the second device axis (3a) and with components parallel to the second device axis (3a), the clamping balls (6) each projecting with a first region (6a) out of the second element (5) and being spaced radially from the first device axis such that the first regions (6a) of the clamping balls (6) are guidable by the entrance regions (9a) into the clamping portions (9b) when the second element (5) is in an insertion position on coupling of the first clamping device (2) to the second clamping device (3) and then being capable of being brought into a clamping position in the clamping portions (9b) by rotation of the second element (5) relative to the first element (4) about the coupling axis (A), the clamping position enabling the first and second contact faces (2b, 3b) to be pressed together with the coupling force.

2. The clamping system (1) according to Claim 1, **characterized in that** the first clamping device (2) has a support face (10) for the clamping balls (6) extending about the first device axis (2a), the clamping balls (6) resting on the support face (10) at second regions (6b) remote from the first regions (6a).

3. The clamping system (1) according to Claim 2, **characterized in that** the first clamping device (2) comprises a third element (11), which is arranged between the first element (4) and the second element (5) and is mounted on the first and/or second element (4, 5) rotatably about the first device axis (2a), the support face (10) being formed on the third element (11).

4. The clamping system (1) according to Claim 3, **characterized in that** the third element (11) is mounted on the first element (4) by way of a pivot bearing (12) running rotationally symmetrically about the first device axis (2a), on coupling the clamping balls (6) can be set in rotation by movement along the helical slot profiles, the clamping balls (6) enable the third element (11) to rotate about the first device axis (2a) due to their rotation and their contact with the support face (10), and the pivot bearing (12) enables a reduction in frictional forces between the rotating third element (11) and the first element (4) on build-up of the coupling force.

5. The clamping system (1) according to Claim 4, **characterized in that** the pivot bearing (12) is formed of a needle bearing or bearing balls and preferably enables the forces transmissible to the third element (11) by the clamping balls (6) at angles to the first device axis (2a) to be diverted at substantially the same angles to the first element (4).

6. The clamping system (1) according to any one of Claims 1 to 5, **characterized in that** the clamping system (1) comprises a rotary device (13, 14), which enables the second element (5) to rotate relative to the first element (4) about the first device axis (2a) between the insertion position and the clamping position.

7. The clamping system (1) according to Claim 6, **characterized in that** the rotary device (13, 14) comprises a spring device (13) and an actuating device (14), the spring device (13) enabling the second element (5) to be held with a pretensioning force in the clamping position relative to the first element (4) and the actuating device (14) enabling the second element (5) to move contrary to the pretensioning force relative to the first element (4) into the insertion position.

8. The clamping system (1) according to any one of Claims 1 to 7, **characterized in that** the clamping system (1) comprises an aligning device (15), which has engaging elements (15) on the first clamping device (2) and on the second clamping device (3) which engage in one another on coupling in a predetermined alignment of the first clamping device (2) relative to the second (3) about the coupling axis (A), the engaging elements (15) being arranged such that, on coupling of the two clamping devices with the second element (5) in the insertion position, the clamping balls (6) are insertable into the entrance regions (9a).

9. The clamping system (1) according to any one of Claims 6 to 8, **characterized in that** the first clamping device (2) comprises a first connecting device (16), which is connectable with a machine part, preferably a robot arm (17), and the second clamping device (3) comprises a second connecting device (18), which is connectable with an end effector (19).

10. The clamping system (1) according to Claim 9, **characterized in that** the first clamping device (2) comprises a drive (20) with an input shaft and the second clamping device (3) comprises an output shaft, which, on coupling of the first clamping device (2) with the second clamping device (3), can be brought into connection with the input shaft such that a rotational motion of the input shaft can be transferred to a rotational motion of the output shaft.

11. The clamping system (1) according to Claim 10, **characterized in that** the clamping system (1) comprises a first shaft end (21) with a first form contour and a second shaft end (22) with a second form contour, wherein the first form contour can be brought into formlocking engagement with the second form contour in a whole number n of relative rotational positions of the two shaft ends (21, 22).

12. The clamping system (1) according to Claim 11, **characterized in that** a rotary aligning apparatus (23) is formed between the first shaft end (21) and the second shaft end (22), which rotary aligning apparatus (23) comprises at least one alignment slot (24) at the first shaft end (21) and at least one pretensioned, mobile engaging element (25) at the second shaft end (22), the number of alignment slots (24) corresponding to the number n of relative rotational positions, each alignment slot (24) extending helically over an angular range of at least 360°/n and, if there is more than one alignment slot (24), the alignment slots (24) being distributed at equal angular distances about the shaft axis.

13. The clamping system (1) according to any one of Claims 10 to 12, **characterized in that** the input shaft extends radially within the first and second elements (4, 5) along the first device axis (2a) and the output shaft extends radially within the slot element (8) along the second device axis (3a).

14. The clamping system (1) according to Claim 13, **characterized in that** the second connecting device (18) involves drive transfer from the output shaft to a tool connection.

15. A changeover system having a robot arm (17), a magazine (26) for end effectors (19), at least one end effector (19) and at least one clamping system (1) according to any one of Claims 1 to 14, the first or second clamping device (2, 3) of the at least one clamping system (1) being arranged on the robot arm (17) and respectively the second or first clamping device (3, 2) of the at least one clamping system (1) being arranged on the at least one end effector (19).

## Revendications

1. Système de serrage (1) comprenant un premier dispositif de serrage (2), qui présente un premier axe de dispositif (2a) et une première surface de contact (2b) autour du premier axe de dispositif (2a), et comprenant un deuxième dispositif de serrage (3), qui présente un deuxième axe de dispositif (3a) et une deuxième surface de contact (3b) autour du deuxième axe de dispositif (3a), le premier et le deuxième dispositif de serrage (2, 3) pouvant être couplés dans la direction d'un axe de couplage (A) de telle sorte que la première et la deuxième surface de contact (2b, 3b), soumises à une force de couplage, soient en appui l'une contre l'autre, **caractérisé en ce que** le premier dispositif de serrage (2) comprend un premier élément (4), un deuxième élément (5) et au moins trois billes de serrage (6), le premier et le deuxième élément (4, 5) pouvant tourner l'un par rapport à l'autre autour du premier axe de dispositif (2a) et les au moins trois billes de serrage (6) étant montées de manière à pouvoir rouler, le long d'une ligne circulaire s'étendant autour du premier axe de dispositif (2a), à des positions du deuxième élément (5) fixes dans la direction circonférentielle et dans la direction radiale, et le deuxième dispositif de serrage (3) présentant, dans un élément à rainures (8), au moins trois guidages à rainure (9), qui sont disposés le long d'une ligne circulaire s'étendant autour du deuxième axe de dispositif (3a) à des intervalles angulaires identiques à ceux des billes de serrage (6), s'étendent chacun, dans une zone d'accès (9a) destinée à l'introduction des billes de serrage (6), parallèlement au deuxième axe de dispositif (3a) et s'étendent ensuite chacun, dans une section de serrage (9b), partiellement autour du deuxième axe de dispositif (3a), les sections de serrage (9a) étant formées par des tracés de rainure hélicoïdaux ayant des composantes tangentielles autour du deuxième axe de dispositif (3a) et des composantes parallèles au deuxième axe de dispositif (3a), les billes de serrage (6) faisant chacune saillie hors du deuxième élément (5) par une première zone (6a) et étant espacées radialement du premier axe de dispositif de telle sorte que, lors du couplage du premier dispositif de serrage (2) avec le deuxième dispositif de serrage (3), dans une position d'introduction du deuxième élément (5), les premières zones (6a) des billes de serrage (6) puissent être guidées à travers les zones d'accès (9a) jusque dans les sections de serrage (9b), puis puissent être amenées, par rotation du deuxième élément (5) par rapport au premier élément (4) autour de l'axe de couplage (A), dans les sections de serrage (9b), dans une position de serrage permettant de presser la première et la deuxième surface de contact (2b, 3b) l'une contre l'autre avec la force de couplage.

2. Système de serrage (1) selon la revendication 1, **caractérisé en ce que** le premier dispositif de serrage (2) présente une surface d'appui (10) s'étendant autour du premier axe de dispositif (2a) pour les billes de serrage (6), les billes de serrage (6) étant en appui contre la surface d'appui (10) par des deuxièmes zones (6b) opposées aux premières zones (6a).

3. Système de serrage (1) selon la revendication 2, **caractérisé en ce que** le premier dispositif de serrage (2) comprend un troisième élément (11), qui est disposé entre le premier élément (4) et le deuxième élément (5) et est monté rotatif autour du premier axe de dispositif (2a) sur le premier et/ou le deuxième élément (4, 5), la surface d'appui (10) étant formée sur le troisième élément (11).

4. Système de serrage (1) selon la revendication 3, **caractérisé en ce que** le troisième élément (11) est monté sur le premier élément (4) par l'intermédiaire d'un palier rotatif (12) s'étendant de manière symétrique en rotation autour du premier axe de dispositif (2a), lors du couplage, les billes de serrage (6) pouvant être mises en rotation par le mouvement le long des tracés de rainure hélicoïdaux, les billes de serrage (6), du fait de leur rotation et de leur contact avec la surface d'appui (10), pouvant faire tourner le troisième élément (11) autour du premier axe de dispositif (2a), et le palier rotatif (12) permettant, lors de l'établissement de la force de couplage, de réduire les forces de frottement entre le troisième élément (11) en rotation et le premier élément (4).

5. Système de serrage (1) selon la revendication 4, **caractérisé en ce que** le palier rotatif (12) est formé par un roulement à aiguilles ou par des billes de palier et permet de préférence de transmettre au premier élément (4), essentiellement sous les mêmes angles, les forces pouvant être transmises par les billes de serrage (6) au troisième élément (11) sous des angles par rapport au premier axe de dispositif (2a).

6. Système de serrage (1) selon l'une des revendications 1 à 5, **caractérisé en ce que** le système de serrage (1) comprend un dispositif de rotation (13, 14), qui permet de faire tourner le deuxième élément (5) par rapport au premier élément (4) autour du premier axe de dispositif (2a) entre la position d'introduction et la position de serrage.

7. Système de serrage (1) selon la revendication 6, **caractérisé en ce que** le dispositif de rotation (13, 14) comprend un dispositif à ressort (13) et un dispositif d'actionnement (14), le dispositif à ressort (13) permettant de maintenir le deuxième élément (5) par rapport au premier élément (4) dans la position de serrage avec une force de précontrainte et le dispositif d'actionnement (14) permettant de déplacer le deuxième élément (5) par rapport au premier élément (4), à l'encontre de la force de précontrainte, dans la position d'introduction.

8. Système de serrage (1) selon l'une des revendications 1 à 7, **caractérisé en ce que** le système de serrage (1) comprend un dispositif d'alignement (15), qui présente, sur le premier dispositif de serrage (2) et sur le deuxième dispositif de serrage (3), des éléments d'engagement (15) qui, lors du couplage, s'engagent les uns dans les autres selon un alignement relatif prédéterminé du premier par rapport au deuxième dispositif de serrage (2, 3) autour de l'axe de couplage (A), les éléments d'engagement (15) étant disposés de telle sorte que, lors du couplage des deux dispositifs de serrage avec le deuxième élément (5) dans la position d'introduction, les billes de serrage (6) puissent être introduites dans les zones d'accès (9a).

9. Système de serrage (1) selon l'une des revendications 6 à 8, **caractérisé en ce que** le premier dispositif de serrage (2) comprend un premier dispositif de liaison (16), qui peut être relié à une partie de machine, de préférence à un bras de robot (17), et le deuxième dispositif de serrage (3) comprend un deuxième dispositif de liaison (18), qui peut être relié à un effecteur terminal (19).

10. Système de serrage (1) selon la revendication 9, **caractérisé en ce que** le premier dispositif de serrage (2) comprend un entraînement (20) comportant un arbre d'entraînement et le deuxième dispositif de serrage (3) comprend un arbre de sortie qui, lors du couplage du premier dispositif de serrage (2) avec le deuxième dispositif de serrage (3), peut être mis en liaison avec l'arbre d'entraînement de telle sorte qu'un mouvement de rotation de l'arbre d'entraînement puisse être transmis en un mouvement de rotation de l'arbre de sortie.

11. Système de serrage (1) selon la revendication 10, **caractérisé en ce que** le système de serrage (1) comprend une première extrémité d'arbre (21) ayant un premier contour de forme et une deuxième extrémité d'arbre (22) ayant un deuxième contour de forme, le premier contour de forme pouvant être mis en prise par complémentarité de forme avec le deuxième contour de forme dans un nombre entier n de positions de rotation relatives des deux extrémités d'arbre (21, 22).

12. Système de serrage (1) selon la revendication 11, **caractérisé en ce qu'**un appareil d'alignement en rotation (23) est formé entre la première extrémité d'arbre (21) et la deuxième extrémité d'arbre (22), lequel comprend, sur la première extrémité d'arbre (21), au moins une rainure d'alignement (24) et, sur la deuxième extrémité d'arbre (22), au moins un élément d'engagement (25) mobile et précontraint, le nombre de rainures d'alignement (24) correspondant au nombre n de positions de rotation relatives, chaque rainure d'alignement (24) s'étendant de manière hélicoïdale sur une plage angulaire d'au moins 360°/n et, en présence de plus d'une rainure d'alignement (24), les rainures d'alignement (24) étant réparties à intervalles angulaires égaux autour de l'axe de l'arbre.

13. Système de serrage (1) selon l'une des revendications 10 à 12, **caractérisé en ce que** l'arbre d'entraînement s'étend radialement à l'intérieur du premier et du deuxième élément (4, 5) le long du premier axe de dispositif (2a) et **en ce que** l'arbre de sortie s'étend radialement à l'intérieur de l'élément à rainures (8) le long du deuxième axe de dispositif (3a).

14. Système de serrage (1) selon la revendication 13, **caractérisé en ce que** le deuxième dispositif de liaison (18) comprend une transmission d'entraînement de l'arbre de sortie à un raccord d'outil.

15. Système de changement comprenant un bras de robot (17), un magasin (26) pour des effecteurs terminaux (19), au moins un effecteur terminal (19) et au moins un système de serrage (1) selon l'une des revendications 1 à 14, le premier ou le deuxième dispositif de serrage (2, 3) de l'au moins un système de serrage (1) étant disposé sur le bras de robot (17), et le deuxième ou, respectivement, le premier dispositif de serrage (3, 2) de l'au moins un système de serrage (1) étant disposé sur l'au moins un effecteur terminal (19).
